Europäisches Patentamt

European Patent Office

Office européen des brevets

(19)

(11) Publication number: **0 128 023**
**B1**

(12) **EUROPEAN PATENT SPECIFICATION**

(45) Date of publication of patent specification: **21.10.87**

(51) Int. Cl.⁴: **H 01 M 8/04**

(21) Application number: **84303694.8**

(22) Date of filing: **01.06.84**

(54) Cooling assembly for fuel cells.

(30) Priority: **02.06.83 US 500464**
**02.06.83 US 500465**
**02.06.83 US 500498**

(43) Date of publication of application:
**12.12.84 Bulletin 84/50**

(45) Publication of the grant of the patent:
**21.10.87 Bulletin 87/43**

(84) Designated Contracting States:
**AT BE CH DE FR GB IT LI LU NL SE**

(56) References cited:
**US-A-1 913 573**
**US-A-2 819 731**
**US-A-3 969 145**
**US-A-4 310 605**

(73) Proprietor: **ENGELHARD CORPORATION**
**70 Wood Avenue South CN 770**
**Iselin New Jersey 08830 (US)**

(72) Inventor: **Kaufman, Arthur**
**69 Burnett Terrace**
**West Orange New Jersey 07052 (US)**
Inventor: **Wittel, Charles F.**
**deceased (US)**
Inventor: **Werth, John**
**204 Bertrand Drive**
**Princeton New Jersey 07052 (US)**

(74) Representative: **Colgan, Stephen James et al**
**CARPMAELS & RANSFORD 43 Bloomsbury**
**Square**
**London WC1A 2RA. (GB)**

Courier Press, Leamington Spa, England.

## Description

### Background of the Invention

This invention relates to an improved cooling apparatus, and, more specifically, to an improved cooling assembly for use in fuel cell stacks.

Fuel cell design and operation typically involves conversion of a hydrogen-containing fuel and some oxidant into DC electric power through an exothermic reaction. The chemistry of this reaction is well known and has established parameters and limitations. One such limitation is that the electrochemical reaction produces, as a byproduct thereof, substantial waste heat which must be removed in a controlled manner to maintain the cells at their desired operating temperature. For efficient operation, it is generally desirable to maintain the cells at substantially uniform temperature and at a temperature level which is consistent with a controllable rate of reaction of the fuel cells therein.

Conventional methods for removal of waste heat from the fuel cell environment have traditionally involved the use of a laminar heat exchanger assemblies, or cooling assemblies, incorporated within and arranged parallel to the various other layers from which the fuel cells are constructed. Typically, the components of the cooling assembly take the form of passageways which contain a circulating coolant material. The heat generated within the stack is transferred to the coolant as it is circulated through the stack. The coolant is then brought out of the stack and into a heat exchanger where the heat is removed therefrom before the coolant is recirculated through the stack.

In the above manner, the cooling assembly enables control over the temperature of the reaction environment of the fuel cell stack and, thus, its rate and efficiency. The pattern of distribution of the coolant passageways within the stack, their relative sizes, the heat capacity of the coolant fluid and the volume of coolant which is circulated through the cooling assembly per unit of time determine the heat transfer capacity of the cooling system. Because the cooling system is generally an integral part of the fuel cell stack, it should be electrically isolated from the stack and also should not be adversely affected by corrosive media within the stack such as the hot electrolyte.

The problems associated with corrosion as well as the undesirable flow of electrical current from the stack into the cooling loop are described in detail in U.S. Patents 3,964,929; 3,964,930; and 3,969,145. These patents address the problem of the so-called "shunt currents" and attempt to resolve it by electrically insulating the cooling system from ground. This minimizes the driving potential of such currents relative to the coolant. Other techniques for avoiding the problems associated with shunt currents include the use of dielectric coolants.

The heat exchanger configuration described in these patents is rather typical of that employed by the prior art. Generally, the configuration consists of a series of parallel tubes connected to what is generally referred to as a "plenum". The plenum is a reservoir from which coolant is simultaneously distributed into the parallel tubes which are embedded in a fuel cell cooling assembly. After passage of the coolant through the parallel tubes, it is collected in another plenum and, thereafter, returned, through a cooling loop, to the inlet plenum.

The cooling assembly tubes are composed of electrically conductive material such as copper. Water can be used as the coolant and the metal tubes are coated either on their internal or external surfaces with a dielectric material such as polytetrafluorethylene. This coating is used to reduce the possibility of shunt currents and corrosion of the tubes. The coated tubes are located in passageways formed in the plates of fuel cells in the stack. However, due to manufacturing tolerances, it is difficult to avoid voids such as spaces between the tubes and the walls of the passageways. Since air is a poor conductor of heat, such air spaces can be filled with a thermally-conductive grease which is compatible with the electrolyte to maximize heat transfer from the cells to the coolant.

These types of systems also use a sacrificial anode material at the tube ends to guard against corrosion. In addition, there is the possibility of discontinuities occurring in the Teflon (Teflon is a registered Trade Mark), (polytetrafluoroethylene) layer such as by manufacturing imperfections, differential thermal expansion, damage during the assembly process, poor bonding etc. This causes two problems; first the corrosive media in the fuel cell will be able to directly attack the tube, and, second, the thermal contact will be diminished.

A variation in cooling assembly design is disclosed in U.S. Patent 4,233,369. In this patent, a fibrous, porous coolant tube holder, which also serves as a member through which a reactant gas can travel, is used to hold copper coolant tubes. The tubes held in channels in the holder, are connected to a coolant inlet header and coolant outlet header. Between the headers, the tubes pass through the stack, make a U-turn and pass back through the stack. The tubes are pressed into the channels and have caulking between the channel walls and tube. In addition to reduced corrosion, this system makes the separator plate thinner and easier to manufacture.

Other techniques are known for bringing coolant materials into a fuel cell stack. For instance, a tubeless system has been used wherein a metal plate is grooved in a pattern on its surface with one or more inlets and outlets. The grooved surface of the plate is then covered with a second ungrooved metal plate, called a brazing sheet, to create an assembly having enclosed coolant passageways and coolant inlet and outlets. In addition, similar passageways can be constructed by assembling two such brazing plates with partitions therebetween which form coolant passageways.

It is evident that the demands upon the cooling systems for fuel cells are significantly greater and more specialized than those encountered by other devices in different heat transfer environments. U.S. Patents 1,913,573; 2,819,731; 2,820,615; 2,864,591; and 3,847,194 are illustrative of some of the conventional heat transfer devices found in areas other than the fuel cell-related technologies. In virtually all the heat exchangers described in the immediately foregoing list of patents, the environmental setting contemplated for their use is much more forgiving than that encountered in fuel cells.

Accordingly, the present invention provides a simplified cooling assembly that maximizes heat transfer from the fuel cell stack to the coolant without undue manufacturing and assembly tolerances. The cooling assembly is essentially noncorrosive in the fuel cell environment and avoids shunt currents without the need for additional electrical isolation thereof from adjacent fuel cells within the stack. The assembly can be made as an integral component of a fuel cell and is effective without the use of the coatings used by prior art devices.

### Summary of the Invention

The fuel cell cooling assembly described herein utilizes a conformable conduit for carrying coolant through the assembly. The conduit is held by a member or members containing channels which, upon assembly with the conduit, conform the conduit into intimate contact with the surface of the channels to maximize heat transfer from the fuel cell to the coolant.

In one embodiment, the conduit can comprise a non-corroding, metal-free, dielectric material. The conduit can also be a continuous tube having periodic corrugations therein to accommodate the bends necessary to arrange the conduit into a serpentine configuration without crimping. The conduit maximizes heat transfer in a given area while necessitating only one inlet and one outlet for the coolant.

In another embodiment, the cooling assembly can be used in a stack of discrete fuel cells in which two of the discrete adjacent cells are separated from one another by a manifold-free heat exchanger assembly. The assembly comprises a termination plate from each of the adjacent cells which, in combination, form a predetermined channel pattern to intimately cradle a continuous, non-corrodible, crimp-resistant electrically insulated conduit.

### Brief Description of the Drawings

This invention will now be described by reference to the following drawings and description in which like elements have been given common reference numerals:

Figure 1 is a schematic representation of a fuel cell assembly comprising a plurality of stacked fuel cells with intermediate cooling plates and terminal current collecting plates.

Figure 2 is a perspective view of a portion of the fuel cell assembly of Figure 1, illustrating an individual fuel cell in greater detail.

Figures 3(a) and 3(b) are perspective views showing two embodiments of the cooling assembly.

Figure 4 is a view in partial cross section of a cooling assembly which has been isolated from the fuel cell assembly illustrating the serpentine arrangement of conduit means as it weaves through the predetermined channel pattern formed in the members which retain the conduit means.

Figure 5 is a cross section through Figure 4 at Section A—A.

Figures 6(a) and 6(b) are schematic illustrations depicting the intimate contact between the conduit means and members of the cooling assembly.

Figures 7(a) and 7(b) are schematic illustrations of the formation of the truncated half-circle grooves.

Figure 8(a)—(c) are schematic illustrations of the coolant tube and the grooves at various times.

Figure 9 is a schematic illustration of the coil pattern after the coil material is stretched out between those sections thereof which accommodate bends in the coolant tube.

Figure 10 is a schematic illustration of the coil support in the coolant tube before the tube is bent, the tube being partially cut away.

Figure 11 is a schematic illustration of the coil support in a tube arranged in serpentine configuration.

### Detailed Description of the Preferred Embodiments

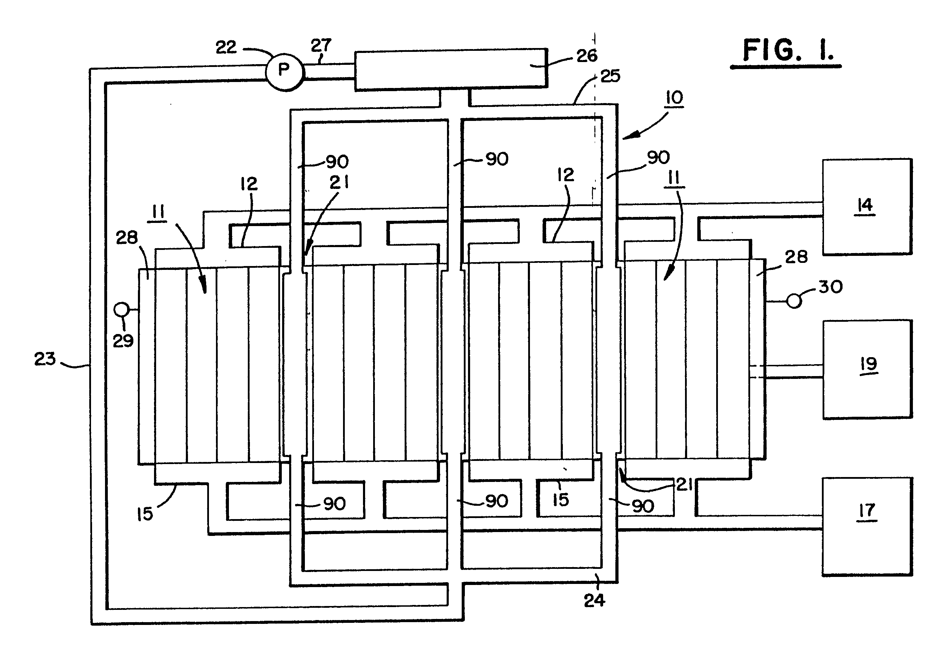

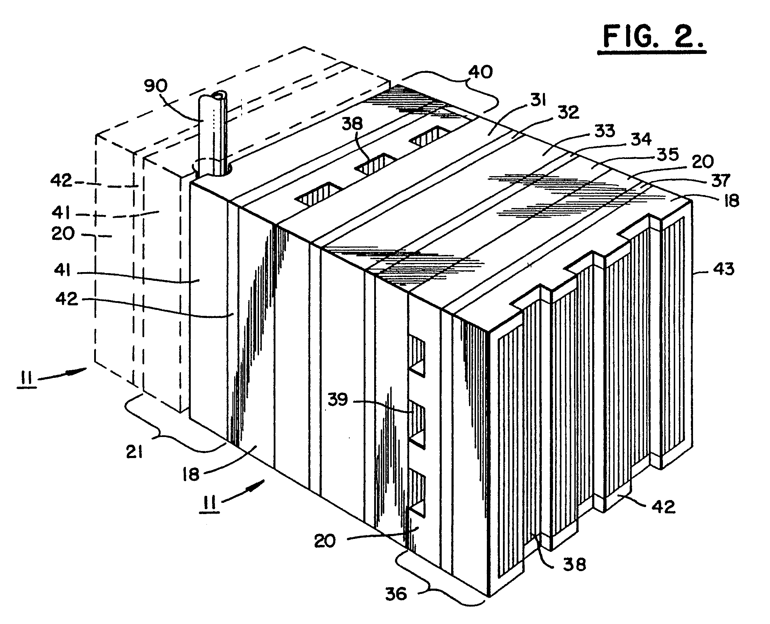

An exemplary fuel cell stack assembly 10 employing the invention is shown in Figures 1 and 2. The stack assembly 10 includes a plurality of fuel cells 11. Hydrogen gas input manifolds 12 are arranged along one side of the stack assembly 10. Although a plurality of manifolds 12 are shown for each group of fuel cells 11, a single such manifold arrangement could be used if desired. The manifolds 12 are connected to a source of hydrogen gas 14. Hydrogen gas collecting manifolds 15 are arranged along the opposing stack side in correspondence with the hydrogen gas input manifolds 12. Here again, although a plurality of manifolds 15 are shown, a single such manifold could be used if desired. The collecting manifolds 15 are connected to a hydrogen gas discharging or recirculating system 17. The hydrogen gas from the input manifolds 12 flows through gas distribution plates 18 to the collecting manifolds 15.

In similar fashion, a plurality of oxygen input manifolds (not shown) are arranged along another stack side connecting the one stack side and the opposing stack side. These oxygen manifolds are connected to an oxygen source 19. The oxygen may be supplied in the form of air rather than pure oxygen if desired. A plurality of oxygen collecting manifolds (not shown) are arranged along the stack side opposing the stack side having the oxygen input manifolds connecting the respective one stack side and opposing stack side. The stack sides at which the oxygen manifolds are arranged are generally stack sides other than the ones at which the hydrogen input manifold and hydrogen collecting manifold are connected. The oxygen manifolds are also connected to an oxygen storage or recirculating system (not shown). The oxygen from the input manifolds flows through the oxygen gas distributing plates 20 to the respective collecting manifolds.

Cooling assemblies 21 are arranged periodically between adjacent fuel cells 11 to effect the desired degree of cooling. In the embodiment shown in Figure 1, three cooling assemblies 21 are shown arranged intermediate each group of four cells 11. The cooling material, either liquid or gas, which flows through the cooling assembly 21 can be any suitable material. For instance, it can be a dielectric fluid such as a high temperature oil coolant manufactured by Multitherm Corporation under the trade name PG-1. In the alternative, it can be a non-dielectric coolant such as water or a water and stream mixture.

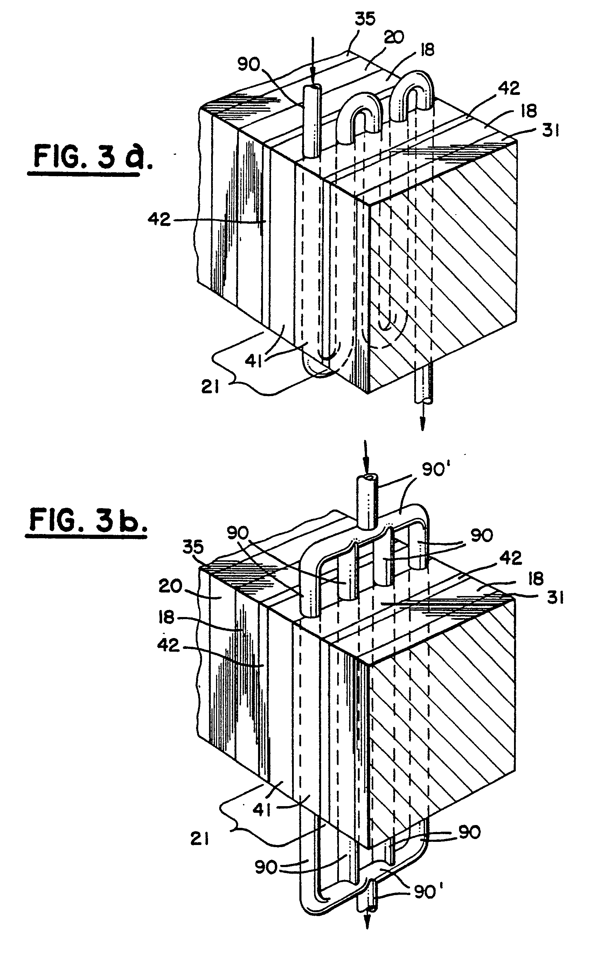

A pump 22 circulates the coolant by way of passageway 23 and distribution reservoir 24 into the respective cooling assemblies 21. The distribution reservoir 24 is joined to each individual cooling assembly by direct connection to the inlet port of the continuous coolant conduit 90 of cooling assembly 21. Conduit 90 is shown in two different configurations in Figures 3(a) and 3(b).

After passing through conduit 90, the coolant flows into the collection reservoir 25. The reservoir 25 is connected to a heat exchanger 26 which reduces the temperature of the coolant to the desired input temperature before it is recirculated through the conduit 90. Collection reservoir 25 is joined to the cooling plate assemblies 21 by direct connection to the outlet port of continuous conduit 90. A coolant passageway 27 connects the heat exchanger 26 back to the pump 22 so that the coolant can be recirculated through the respective cooling assemblies 21.

Reservoirs 24 and 25, referred to hereinabove, are ordinarily only present when the fuel cell stack 10 has a number of cooling assemblies 21, and, even then, the reservoirs are connected directly to each individual cooling assembly 21 at a single point. Alternatively, however, cooling assembly designs could be made wherein more than one continuous conduit 90 operates in parallel to effect serial distribution of coolant throughout the plate or wherein such multiple continuous conduits are complementary to one another and each independently distributes coolant throughout the plate.

The fuel cells 11 and the cooling assemblies 21 are basically electrically conductive so that when they are stacked as shown, the fuel cells 11 are connected in series. In order to connect the stack assembly 10 to a desired electrical load, current collecting plates 28 are employed at the respective ends of the stack assembly 10. Positive terminal 29 and negative terminal 30 are connected to the current collecting plates 28 as shown and may be connected to the desired electrical load by any conventional means.

Any suitable fuel cell design can be utilized with the cooling assembly disclosed herein. Figure 2 depicts a cooling assembly 21 together with portions of a representative fuel cell stack shown in more detail. This figure includes two portions of the stack immediately surrounding cooling assembly 21. Each of the stack portions includes in this embodiment, a plurality of fuel cell units 11. The stack portion to the right of the cooling assembly 21 (in solid lines) shows detail of the various components of the cell 11. The stack portion to the left of cooling assembly 21 (in dotted lines) is representative of another similar fuel cell. Although the portion of the stack in dotted lines is shown slightly removed from the portion in solid lines for clarity, it is understood that these two portions are in contact with each other and conduit 90 in actual operation to provide good electrical and thermal conductivity through the two portions.

Each fuel cell 11, as depicted in Figure 2, includes a hydrogen gas distribution plate 18 and an oxygen or air distribution plate 20. Arranged intermediate between the respective gas distribution plates 18 and 20 are the following elements starting from the hydrogen gas distribution plate 18; anode 31, anode catalyst 32, electrolyte 33, cathode catalyst 34 and cathode 35. These elements, 31—35, of the fuel cell 11 may be formed of any suitable material in accordance with conventional practice.

The hydrogen gas distribution plate 18 is arranged in contact with the anode 31. Typically, the anode comprises a carbon material having pores which allow the hydrogen fuel gas to pass through the anode to the anode catalyst 32. The anode 31 is preferably treated with Teflon (Teflon is a Registered Trade Mark) (polytetrafluoroethylene) to prevent the electrolyte 33, which is preferably an immobilized acid, from flooding back into the area of the anode. If flooding were allowed to occur, the electrolyte would plug up the pores in the anode 31 and lessen the flow of hydrogen fuel through the fuel cell 11. The anode catalyst 32 is preferably a platinum-containing catalyst.

The fuel cell 11 is formed of an electrically conductive material, such as a carbon based material, except for the electrolyte layer which does not conduct electrons but does conduct hydrogen ions. The various elements, 18, 31—35, and 20 are compressed together under a positive pressure during the cell assembly process. The electrolyte 33 can be made of any suitable material such as phosphoric acid. The acid can be dispersed in a gel or paste matrix so that it is immobilized and not a free liquid. An exemplary electrolyte matrix could comprise a mixture of phosphoric acid, silicon carbide particles and Teflon particles. The cathode catalyst 34 and the cathode 35 can be formed of materials similar to the anode catalyst 32 and anode 31.

All of the elements of the fuel cell 11 are arranged after assembly in intimate contact as shown in Figure 2. In order to provide a relatively compact electrically interconnected stack assembly of a plurality of adjacent individual fuel cells 11, the bipolar assembly 36 is used to easily connect together adjacent fuel cells 11. The bipolar assembly 36 is comprised of a hydrogen gas distribution plate 18 and an oxygen or air distribution plate 20 with the impervious interface layer of plate 37 arranged between them. Therefore, the bipolar assembly 36 is comprised of the hydrogen gas distribution plate 18 of one cell 11 and the oxygen or air gas distribution plate 20 of the next adjacent cell 11. The interface layer, or plate 37, may comprise an impervious carbon plate or any other conventional interface as may be desired. The bipolar assembly 36, the plates 18 and 20 and the interface 37 therebetween are securely connected together as a unit so as to have good electrical conductivity.

In order to facilitate the gas flow in the gas distribution plates 18 and 20, respective channels or grooves 38 or 39 are employed. The grooves 38 in the hydrogen gas distribution plate 18 are arranged orthogonally or perpendicularly to the grooves 39 in the oxygen or air gas distribution plate 20. This allows the grooves to be easily connected to respective input and output manifolds 12 and 15; for example, on opposing sides of the cell stack assembly 10.

Although grooves within a particular plate, such as plates 18 or 19, are shown as extending in a unidirectional manner in Figure 2, there can be cross-channels made between these grooves to aid in the distribution of the fluidic reactants. When such cross-channels are utilized, the primary flow of reactants is still in the direction of the grooves 38 and 39 as shown in Figure 2; that is, in the direction that the reactants flow between reactant input and collecting manifolds.

The gas distribution plates 18 and 20 supply the respective hydrogen and oxygen or air gases to the surfaces of their respective anode 31 or cathode 35. In order to more evenly distribute the respective gases at the anode 31 or cathode 35 plate surfaces, the gas distribution plates 18 and 20 are preferably formed of a porous carbon material. This allows the gases to flow through the pores of the plates 18 and 20 between the channels 38 or 39 to provide more uniform gas distribution over the face of the respective anode 31 or cathode 35.

At the ends of the stack, as seen in Figure 1, there are current collecting plates 28. These can be made an integral part of the adjacent gas distribution plate assembly on the end cell in the stack. Optionally, an impervious material, such as aluminum can be placed between the gas distribution plate and current collecting plate or the current collecting plate itself can be made of such a material.

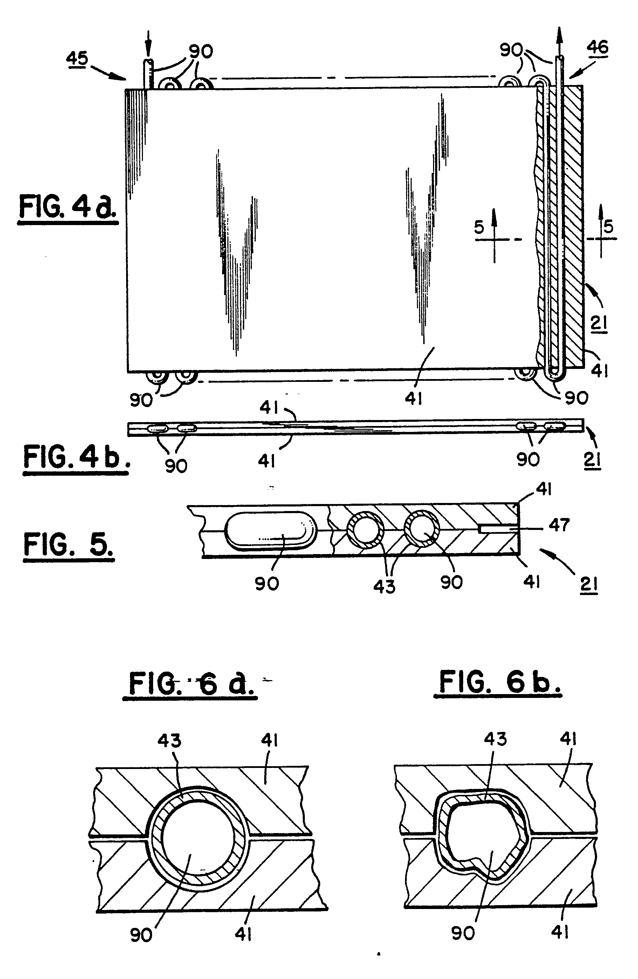

The cooling assembly 21, as shown in Figure 2 and also Figure 4, has at least one coolant conduit means such as conformable tube 90. The conduit carries coolant through the cooling assembly 21. The cooling assemblies 21 shown in Figures 3—5 include a means for holding the conduit tube 90 in the assemblies including a member or plate 41. The member 41, when assembled with the conduit tube, conforms at least a portion of the conduit tube into intimate contact with the member 41.

The embodiment of the cooling assembly 21 shown in Figure 2 includes the member 41 as an integral part of the gas distribution assembly 40. The assembly 40 includes hydrogen gas distribution plate 18 and a gas impervious plate 42, which is optional, assembled together with the member 41. A similar assembly is shown in dotted lines on the left side of tube 90, except that the oxygen gas distribution plate 20 is made an integral part of the assembly. The gas distribution plates 18 and 20 could alternatively be film bonded directly onto member 41.

The improved cooling assembly 21 can take several embodiments, two of which are shown in more detail in Figures 3(a) and 3(b). In a first embodiment shown in Figures 3(a), conduit 90 is a single, continuous tube having one inlet and one outlet for coolant. The tube is arranged in a serpentine or similar pattern within members 41 to effect good heat transfer between the members 41 and the tube 90. Although the tube 90 is shown as having its turning bends outside members 41 to sweep back and forth across members 41, the turning bends can alternatively be placed within the members 41. In a second embodiment shown in Figure 3(b), conduit 90 is actually a plurality of conduit tubes 90 passing through the members 41. Coolant, in this latter embodiment, is brought in and exited through a manifold comprising conduit feeders or headers 90' so that all conduits 90 can be fed off a single conduit feeder.

The embodiment shown in Figure 3(a) is the preferred one. This is the manifold-free arrangement which is simpler and less expensive to manufacture and assemble as compared to the arrangement shown in Figure 3(b). The phrase "manifold-free" is intended as descriptive of a heat exchanger in which a coolant is distributed from the portion of the cooling loop which is remote from the fuel cells directly into the cooling assembly so as to provide for serial flow of coolant throughout the cooling assembly. This is in sharp contrast to the devices illustrated in the prior art whereby coolant is simultaneously distributed from a common manifold into a plurality of parallel, and highly localized, channels of the cooling plate each of which is served by individual unconnected coolant paths.

As can be readily appreciated, the phrase "manifold-free" is not, however, intended as exclusive of a coolant distribution system wherein coolant from a common source is simultaneously distributed into two or more continuous channels or conduits arranged in parallel, or otherwise, within the cooling assembly. The coolant flow in this latter type system would not be of the highly localized nature as in the prior art, but rather would and could provide (a) a redundant coolant flow, (b) two or more patterns which are complementary to one another, or (c) a coolant flow pattern in which the direction of flow in one channel is countercurrent to the flow in the other. In any event, this predetermined pattern of distribution of a second continuous channel/conduit would not be highly localized as is dicatated by the prior art systems in which a manifold is an essential element for the simultaneous distribution of coolant through such unconnected localized channels.

In the event a corrosion sensitive material is used in the fabrication of this cooling assembly, it should be effectively isolated from the electrolyte and other hostile chemical agents. In the most preferred embodiments of this invention, the cooling assembly is essentially metal-free; that is, none of the components thereof which are actually or potentially exposed to the corrosive environment of the fuel cell are composed of a corrosive material such as metal. For example, conduit 90 is preferably a fluorinated hydrocarbon polymer.

In fuel cells, the gas distribution plates, such as 18 and 20 in Figure 2, are commonly made of a porous carbon material. To protect the members 41 from corrosion, an improved interfacial layer configuration can be used between members 41 and gas distribution plates 18 and 20 to replace gas impervious plate 42. This interfacial configuration may have, for example, a perforate conductive layer such as a metallic mesh material having a resin, such as polyethersulfone, substantially filling any void space in the mesh. The interface can be assembled between a cell in the fuel cell stack and the cooling assembly.

Figures 4 and 5 show further views of the cooling assembly 21. In this embodiment, the cooling assembly 21 consists of conformable coolant conducting means, the tube 90, for carrying coolant through the assembly. Coolant is brought in through one end of the tube 90, the inlet 45, and removed from the assembly at the other end of tube 90, the outlet 46. A means similar to that described in Figure 1 is used to circulate the coolant through the cooling assembly.

The coolant assembly is located adjacent a cell or between two adjacent cells in a fuel cell stack as shown in Figure 1. The cooling apparatus includes a means for holding the tube 90, in this embodiment shown as members 41. The member 41 has means therein for holding the tube 90 such as channels 43 shown in Figure 5. When the members 41 are assembled together with the tube 90, at least a portion of the tube 90, and particularly the surface area of the tube, conforms to make intimate contact with the member 41.

The conduit means, the tube 90, is preferably non-corrodible and metal-free. The tube 90 can be made of any suitable material such as a dielectric material. One material suitable for this purpose is polytetrafluorethylene (Teflon). Thus, tube 90 can be a Teflon tube having about a 6.86 mm (0.270 inch) outside diameter and a 0.38 mm (0.015 inch) wall thickness. It also is preferably a single, continuous length of tube having one inlet and one outlet to eliminate complex inlet and outlet manifolds. It can be placed in a zig-zag or serpentine configuration with periodic bends therein to sweep it back and forth across the cooling member 41. The bends in tube 90 may occur outside the member 41, as shown in Figure 4, or, alternatively, may occur within the member.

In the use of a Teflon tube in cooling assemblies, some consideration should be given to the pressure limits of the tube. A tube such as the type described immediately above was operated in a fuel cell having a normal operating temperature of about 177—204°C (350—400 degrees F). It was found that the specific tube used might burst if coolant pressures were maintained in the area of 689 KPa (100 psi) and above. On the other hand, bursting did not occur when the pressure was maintained in a range up to approximately 345—413 KPa (50—60 psi).

The areas of the tube 90 which are bent can be made to bend as desired by any suitable means. For instance, the tube 90 can be manufactured to have predetermined bends in it such as approximately 180 degrees before assembly with member 41. Its shape can conform to the serpentine arrangement it should follow to pass through channels 43 when the cooling assembly is put together. The tube 90 can also be made of a straight section of tubing which is bent into the serpentine arrangement during assembly with members 41. To ease the bending process, corrugated segments can be periodically arranged along its length to allow for short radius bending thereof without crimping or other damage or failure occurring to the tube as it is arranged within the predetermined channel pattern formed by members 41.

The corrugations are typically less than one or two inches in length and they permit a tight bending radius to allow a tightly-packed, zig-zag geometry that yields a high ratio of heat transfer area to total plate area. The bends can be 180 degrees or some other angle to accommodate the pattern of sweeping the tube back and forth across members 41. One method of creating such corrugations is to apply a hot mandrel to those sections of the tube where the tube is to be bent. The tube material, such as Teflon, is thereby softened by the hot mandrel while also being constrained by the mandrel. The tube wall in this condition takes on a fluted (or corrugated) configuration.

Instead of corrugating tube 90 in its portions which are to be bent, other approaches can be used in bending the tube 90 to allow short radii without the risk of crimping the tube or causing other damage to it. One such approach is to provide a support means in the tube to guard against such damage. The internal support can be placed throughout the length of the tube or only at the locations at which the tube is to be bent. Such a support can be located entirely within the tube's central passageway that carries the coolant, and it can be an additional component assembled to the tube.

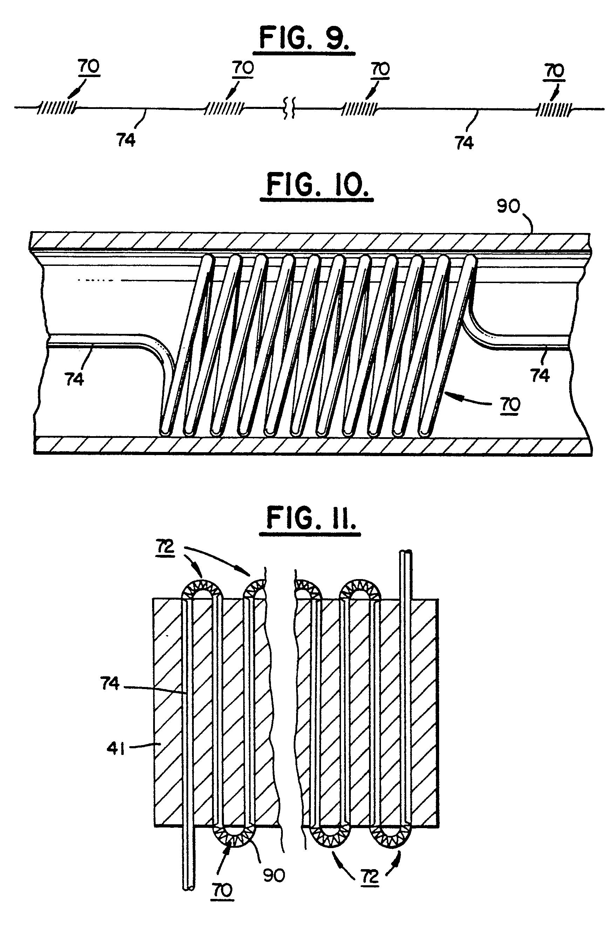

A preferred type of internal support means is carried out by inserting wire coils inside the tube at the locations that the tube is to be bent. This is shown in Figures 9—11. Such coils 70 can have a diameter slightly less than the inside diameter of the tube 90 and enable the coolant to pass through inside diameter of the coil as well as around the coils and between the coils and tube wall.

Such coils have been found to prevent excess crimping in the tube wall when the tube is formed into short radius bends 72. The coils at the bends can be connected to one another by any suitable means such as by a straight section 74 of wire therebetween. The coils can be inserted into the tubing by their leading end and fully pushed into the entire length of the tube. In this manner, the tightly-wrapped coiled portions 70 are located in the areas 72 of the tube to be bent while the straight sections 74 are located along the tube between the bends.

The coils can be made of any suitable material. For instance, they can be safely made of a metallic material such as steel since they are completely located in the tube and, thus, are not exposed to the corrosive materials used in the fuel cell environment. The approach of using an internal support such as a coil in the tube is believed significantly less expensive to manufacture than the placement of corrugations in the tube material itself as described above. The shape, size and configuration of the internal support can be any suitable one so long as the coolant is allowed to flow in the tube as intended.

One manner of forming the metal coil internal support is to start with a length of tightly-wrapped coil or spring stock of an appropriate length and diameter and stretch out the coil material in conformance with the frequency of bends in the tube. A small, still tightly-wrapped length 70 can be left between each uncoiled section 74 sufficient to accommodate a bend in the tube. The portion of the coil support structure between the bends is then simply a straight, uncoiled section of coil material joined to tightly-wrapped sections of coil at the bends. In this manner, the entire internal support can be made of a single continuous length of coil material.

The coil pattern; e.g., tightly-wrapped coil sections separated by uncoiled sections, could be manufactured by hand with suitable coil stretching and anchoring tools to match the intended configuration of the bends of the tube in the cooling assembly. To provide a coil pattern of greater dimensional control and accuracy, any conveniently available mechanism can be used. For instance, an ordinary lathe was used to process a length of tightly-wrapped coiled material into a coil pattern with sections of tightly-wrapped coil interspersed with uncoiled, stretched out lengths of coil material. The lathe was used simply as a holding and stretching device and not in its usual machining capacity.

In the lathe process, the coil was placed in the chuck of the lathe with a section extending out towards the carriage along the lathe bed. A clamp or some other appropriate forcing device was attached to the extending section of the coil, but leaving a tightly coiled portion beyond. The clamp was then moved away from the chuck to stretch out the coil into a somewhat straight section so as to deform the coil material in that area.

The above procedure provided a tightly-wrapped coil section separated from the rest of the coil by a relatively unwrapped or straight section of coil material. The coil stock was then loosened in the chuck and moved a bit to allow another tightly-wrapped coil section thereof to extend beyond the chuck. The clamp was then again fastened on the coil stock having a tightly-wrapped portion between it and the previously stretched out portion to be placed in a bend in the tube. After this section was stretched, the process was repeated until there were enough tightly-stretched coiled sections of coil material between stretched out sections to accommodate all the bends in the tube.

The coil pattern manufactured in the above described manner was used in a cooling assembly with good results. There was enough space within the inner diameter of the coil so as not to unduly impede the flow of coolant. For instance, a tube having a nominal size of 6.35 mm (1/4 inch) diameter was used which has an inside diameter of approximately 6.86 mm (0.270 inches). A coil having an outside diameter slightly less than the inside diameter of the tube, and inside diameter of approximately 4.8—5.1 mm (0.190—0.200 inches), made in the above-described manner, was screwed into a length of tube approximately 9.1 m (30 feet) long. In using the tube with the coil inserted therein, the pressure drop across the entire tube length was held to less than 138 KPa (20 psi).

In addition to the coil-type internal support, other types of internal supports can be used. For instance, an internal cylinder or tube, or member of other configuration, could be placed in the coolant tube to ease crimping in the bend areas. Such an internal tube should be rigid so as not to overly restrict or impede coolant flow yet enable small radius bends in the coolant tube. Internal tubes for this purpose can be made out of any suitable material such as plastic or metal.

The channels 43 within members 41 can take any pattern which is suitable for cooling. The contour of the channels 43 may preferably have the shape that approximately conforms with the natural peripheral shape of tubes 90. This is so that when members 41 are placed over the tubes 90, there is an intimate surface-to-surface contact between the two components and a minimization of any air spaces or other voids therebetween. Any such gaps that might otherwise exist are closed by the tube conforming to the surface contour of the channels 43. The sizing of the channels 43 relative to the sizing of the tubes 90 may be such that the channel at least slightly compresses the tube periphery when the two are assembled into operating positions. Thus, the channel 43 takes on a shape which closely conforms to the tube 90 when the two are assembled together.

The cooling assembly 21 can be made as a separate unit from the individual cells of the fuel cell stack so that members 41 and conduit means 90 can be placed or inserted periodically along the stack to permit cooling. Alternatively, members 41 can be made part of or integral with the gas distribution plates of the fuel cell adjacent to the cooling assembly. In this configuration, two such stack portions having an integral member 41 on the end cell can be assembled with the cooling tubes to form a cooling assembly within the stack.

The function of the straight sections of tube 90 is to effect the transfer of heat from the grooved surfaces 43 in members 41 in which they are nestled. The members 41, containing the grooved surfaces, can be made of any solid, thermally and electrically conductive material, such as any material commonly used in hot fuel cell or battery plates.

The grooves or channels 43 in member 41 can assume any suitable cross-section profile to accomplish the result desired. The channel shape can be formed to conform the tube 90 to its shape and thereby cause intimate contact therewith when assembled. For instance, the grooves in each member 41 can be cut in an approximately half-round or half-oval cross-section. The surfaces of the members 41 can then be mechanically pressed together with the grooves over the tube 90. The surfaces of the members between the grooves can be brought into contact, as shown in Figures 5—6, to create an electrical contact over the areas adjacent to the grooves. The half-oval grooves allow the cooling tube 90 to conform easily to the surface area of the grooves 43 and, thus, maintain thermal contact without impeding the electrical contact between members 41 or the flow of coolant within the cooling tube 90.

The shape or contour of channels 43 are subject to manufacturing variances. If non-conformable tubes 90 were used therein and large variances occurred in the dimensions and contour of the channels 43 or the tubes, rigid cooling tubes 90 would not conform to the manufactured shape of channel 43. This would create an air space produced between the tube 90 and groove 43. This problem is addressed in the background patents mentioned herein. These patents disclose the use of caulking material in the gaps to improve heat transfer. By using a conformable material for tube 90, such manufacturing variance problems would be automatically overcome by the tendency of the tube 90 to conform to the actual contour of channels 43.

Figures 6(a) and 6(b), show a semi-circular groove 43 in member 41 and a round coolant tube 90. If, after assembly of the cooling assembly 21, the coolant tube 90 fits perfectly within the surrounding grooves 43 in the two plates 41, good surface-to-surface contact occurs between groove 43 and the surface of tube 90. This condition is shown in Figure 6(a). However, as shown in Figure 6(b), if groove 43 is of a different contour than the natural shape of the coolant tube 90, or vice versa, the tube 90 nevertheless conforms to the actual shape of groove 43 since it is conformable. Thus, intimate contact between the tube 90 and plate 41 is still accomplished after the cooling assembly is assembled for operation. The abnormalities in the surface or contour of groove 43 shown in Figure 6(b) are greatly exaggerated for the purposes of clarity of this description.

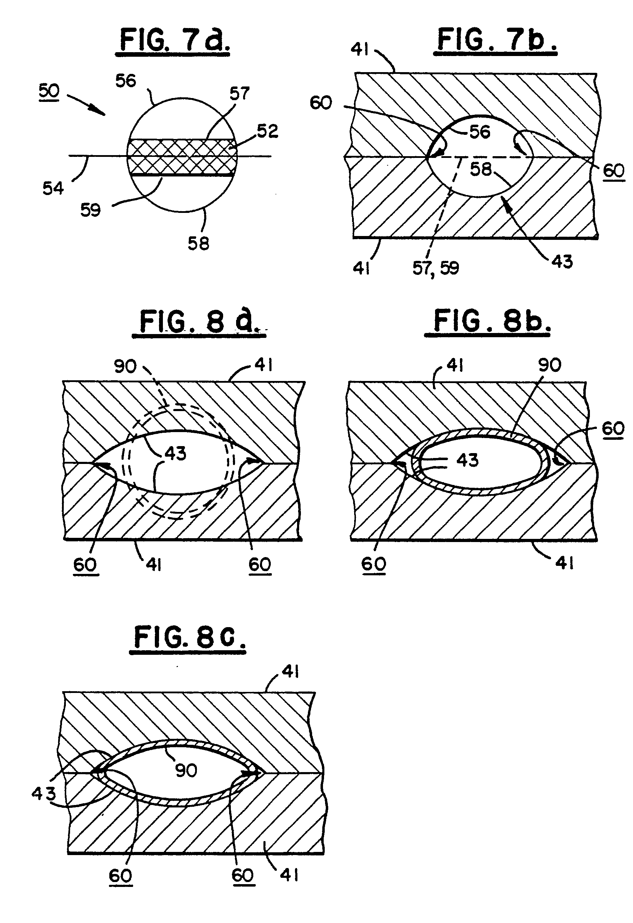

A preferred embodiment of the grooves 43 is shown in Figures 7(a)—(b) and 8(a)—(c). It is noted that these figures are enlarged schematic illustrations use for clarity of description and as such, are not to any particular scale and the components therein are not necessarily proportionally sized with accuracy to regard to one another. In this embodiment, the groove 43, when a cross-section thereof is viewed, takes on the contour or profile of a truncated half circle in each plate. Figures 7(a)—(b) and 8(a)—(c) are partial cross sections of the cooling assembly similar to that shown in Figure 5. When a conformable material is used for tube 90, a quasi-oval groove, such as a truncated half circle rather than a half oval of half circle, has been found to be a very advantageous shape for the grooves 90 in plates 41.

The term "truncated half circle" is described in conjunction with Figures 7(a) and (b). Figure 7(a) depicts the cross section of a circle contour 50 which, when used as is to form the grooves, produces a half circle groove in each plate. The circle 50 has a horizontal center line 54 dividing the circle into upper and lower halves. In order to form the truncated half circle groove, a portion 52 of the circle 50 is cut away as indicated by the cross hatched section of Figure 7(a). When this is done, the remaining portions of the upper and lower portions of the circle 50 are bounded by upper half portion 56 and truncated edge 57 and lower half portion 58 and truncated edge 59, respectively. Each of these forms a truncated half circle groove.

The plates 41 of the cooling assembly are assembled as shown in Figure 7(b) and the upper and lower truncated half circle grooves in each plate 41, when fitted together to provide a channel for the tube (not shown), form a truncated circle contour for the channel. A feature of the truncated half circle grooves is that this shape provides room, at the edges 60 of the groove where the two plates 41 interface, for the walls of the tube to expand. Both the oval and truncated circle channel profiles provide such space which is used by the tube during the assembly and operation of the fuel cell. However, the use of the truncated circle profile in the channel provides optimum contact between the tube's outer surface and the surface of the groove while also providing room for expansion, especially during operation of the cell.

The interaction of the tube 90 with the truncated half circle grooves in each plate is shown in Figures 8(a)—(c). Figure 8(a) shows the shape of grooves 43 when plates 41 are assembled, but without the tube 90 within the channel provided by grooves 43. The cross-section of the tube 90 is, however, superimposed in dotted lines, over the groove 43 to schematically illustrate that the natural shape of tube 90 is altered in this embodiment of the invention when it is assembled with plates 41. Figure 8(b) shows the tube 90 assembled with plates 41. The tube 90 takes the approximate shape shown. The fuel cell has not been placed in operation as yet and, thus, the grooves 43 still leave some room for expansion in the vicinity of edges 60.

Figure 8(c) shows the grooves 41 and the tube 90 when the fuel cell has been placed in operation and has heated up to its normal operating temperature. Coolant (not shown) is also flowing through the tube 90 in this view. During the time that the fuel cell is brought up to operating temperature the materials therein expand. When Teflon is used for the coolant tube 90, the Teflon expands and to a greater degree than the material of plates 41; e.g. a graphite plate. In addition, the coolant flows through the tube 90 with a pressure which tends to push against the interior wall of the tube 90 and expands its outer surface into the vicinity of edges 60.

It can be appreciated, in contrast, that when the grooves 43 are formed by half circles and the channel for the tube 90 is in the shape of a full circle when the plates 43 are assembled, there is no room for expansion of the tube 90. Thus, if the diameter of tube 90 is approximately the same size as the groove, there is little place for the tube 90 to expand when the cell is brought up to operating temperature and/or coolant is passed through the tube. Such expansion could force the plates 41 apart after assembly which would deteriorate the intended performance of the cell.

On the other hand, if the outer size of tube 90 was reduced relative to the groove size to allow adequate expansion room within the groove, the smaller tube would be able to flop around in the plates after assembly whenever the cell is not at full operating temperature. This is disadvantageous in that it may cause damage to the coolant tube, such as during shipping and handling of the fuel cell, and little of the tube's periphery would be continuously in place against the surface of grooves 43 at all times.

The sizes of the grooves 43 and outer diameter of tube 90 are to be chosen so that as much of the periphery of the tube as practical is in contact with the surface of the groove during operation of the cell. However, these sizes, necessarily, should not be such that the expansion of the tube due to the bringing of the cell to operating temperature and the passing coolant through the tube makes the tube force the plates 41 apart. In sizing these elements, it is preferable to leave a slight air gap between the groove edges 60 and the periphery of the tube 90 than risk separation of the plates. A small air gap, such as that shown in Figure 8(c), does not appreciably cut down on the passage of heat from the plates 43 to the coolant in the tube 90. It does, however, provide a reasonable manufacturing tolerance for the grooves and tube.

The actual size of the tube and the profile of the groove are intimately related to provide the desired surface contact between the two elements. These factors are dependent on the application also. The selection of the size of the tube depends, among other things, on the amount of coolant required and the thickness of the tube wall. Once these factors are decided upon and the peripheral size of the tube to be used is determined, the size of the periphery of the tube at cell operating temperatures and with coolant therein can be determined. This, in turn, is taken into account along with the plate material used to determine the size of the groove to provide optimum contact between the groove and tube.

The optimum system results when the tube has substantial contact with the groove when the cell is not at operating temperature, as shown in Figure 8(b), and almost, but not complete contact with the groove when the cell is at operating temperature, as shown in Figure 8(c). In this manner, certain areas of the tube's surface are always in contact with the surface of the groove thereby eliminating the possibility of new gaps being generated between the two as the fuel cell is cycled on and off or over a range of operating temperature.

In the cooling assembly embodiment shown in Figure 5, a polymeric cooling tube 90 is nestled between two grooved members 41 bonded to one another along two narrow strips adjacent to the edges parallel to the straight sections of the cooling tube. Cooling plate materials suitable for high temperature operation and corrosive environment would include strips of polyethersulfone film sandwiched between and bonded to two grooved members 41 made of graphitized or carbonized plates. An alternative embodiment is possible which holds the same grooved members 41 together mechanically until after they are assembled into a fuel cell stack of other device in need of cooling. Still another alternative assembly technique is to hold the plates together with the tube in the channel with a bonding medium such as dissolved polyethersulfone which is cured to an appropriate temperature.

The nature of the member 41 need not be constrained unduly. The shape of groove 43 could be constructed so as to deliberately conform the tube 90 into intimate surface contact with groove 43, for instance, an elongated or oval cross-section rather than circular. Also extremely hard materials need not be used for member 41.

The materials used for member 41 in this configuration could be materials which, in of themselves, conform or collapse around the tube 90 so that intimate contact is fully reached with the tube. The cooling tube can be pressed into half-oval shape grooves cut out of whatever surface or surfaces are to be cooled. In this case, the cooling assembly 21 could consist merely of a Teflon tube and cooling fluid. The complete absence of metal would give this assembly corrosion resistance superior to that of metallic or partly metallic devices whether coated or not.

The cooling tubes themselves, or alternatively, the entire cooling assembly, can be made of a non-corroding material for use in a fuel cell stack. The primary advantages of this construction are an easy and low cost fabrication, total safety against corrosion (non-metallic) and total elimination of shunt currents between cooling plates in the stack without having to otherwise electrically isolate the cooling plates. The flexibility of the cooling tube also provides good thermal conduction thereto in of itself since it tends to be pressed up tightly against the surfaces of the grooves in the members 41. The tube assembly is temperature tolerant, totally corrosion resistant and totally impervious.

It is to be understood that the above described embodiment of the invention is illustrative only, and that modifications thereof may occur to those skilled in the art. Accordingly, this invention is not to be regarded as limited to the embodiment as disclosed herein, but is to be limited only as defined by the appended claims.

**Claims**

1. A fuel cell having a heat transfer assembly for use in removing heat from and cooling the fuel cell, and means for circulating heat transfer material therethrough adjacent the cell, characterized in that the assembly comprises at least one conformable heat transfer material conduit for carrying the material through the assembly and means for holding the conduit in the assembly adjacent the fuel cell including at least one member which is such that, when assembled with the conduit, at least a portion of the conduit conforms into intimate contact therewith.

2. The fuel cell of claim 1 characterized in that the fuel cell is in a stack of fuel cells, the fuel cells having a plurality of laminated plates which include a termination plate at the extremity thereof, and the heat transfer assembly is located in the stack between two adjacent fuel cells, and the means for holding the conduit is integral with and forms part of the termination plate adjacent the conduit.

3. The fuel cell of claim 1 characterized in that the fuel cell is in a stack of fuel cells having a plurality of adjacent individual fuel cell units separated from one another by a heat transfer plate wherein heat transfer material is distributed to, and collected from said plate by a manifold positioned in advance of distribution of said coolant through said plate and a second manifold positioned for collection of the heat transfer material after it passes through said plate, and a manifold-free heat transfer assembly comprising a termination plate from each of two adjacent fuel cell units which, in combination, create said means for holding the conduit with a predetermined channel pattern adapted to intimately cradle a continuous crimp resistant, electrically insulating conduit, said conduit having, at its proximal end, an inlet port for introduction of the heat transfer material, and at its distal end, an outlet port for the discharge of said heat transfer material.

4. The fuel cell of any preceding claim characterized in that the conduit is non-corrodible.

5. The fuel cell of any preceding claim characterized in that the conduit is metal-free.

6. The fuel cell of any preceding claim characterized in that the conduit is a single continuous tube arranged in a serpentine configuration having periodic bends therein and wherein the tube is corrugated at its bent portions.

7. The fuel cell of any preceding claim characterized in that the holding means member has a channel therein to hold the conduit, the channel being shaped so as to conform the conduit to the shape of the channel automatically when the member and conduit are assembled.

8. The fuel cell of claim 7 characterized in that the channel pattern provides a high ratio of heat exchange contact area relative to the total area of the member.

9. The fuel cell of claim 8 characterized in that the channel pattern cradles the conduit in a groove having a truncated half circle contour.

10. The fuel cell of any preceding claim characterized in that there is a plurality of conduits.

11. The fuel cell of claim 1 characterized in that the conduit is a continuous tube having a heat transfer material passageway along the length thereof and at least one bend therein, and a support located within the passageway for enhancing the ability of the conformable conduit to bend into relatively small radii, the passageway maintaining its ability to carry heat transfer material along the length thereof whereby the conformable conduit can be bent in relatively small radii without crimping at the bend or having other structural damage occur thereto.

12. The fuel cell of claim 11 characterized in that the support is a coil.

13. The fuel cell of claim 12 characterized in that the coil is a tightly-wrapped coil in the areas along the length of the conduit at which bends occur and is a stretched out portion of coil material in the areas along the length of the conduit at which bends are absent.

14. A method of forming a fuel cell according to claim 1 wherein the conduit is bent at certain areas in relatively small radii, and wherein the conduit is provided with an anti-crimping internal support structure made from an integral piece of material, said method including the steps of providing a length of tightly-wrapped coil support material, stretching the tightly-wrapped coil material into substantially uncoiled condition only in those portions of the coil length that do not correspond to the areas of the conduit in which bends occur, and inserting the coil material into the conduit.

15. The method of claim 14 characterized in that it contains the step of screwing the coil material into the conduit.

## Patentsansprüche

1. Brennstoffzelle mit einer Wärmeübertragungseinrichtung zum Abführen von Wärme von und zum Kühlen der Brennstoffzelle, und einer der Zelle benachbarten Vorrichtung zum Zirkulieren von Wärmeübertragungsmaterial durch die Einrichtung, dadurch gekennzeichnet, daß die Einrichtung mindestens eine anpaßbare Wärmeübertragungsmaterialleitung zum Hindurchleiten des Materials durch die Einrichtung und eine Vorrichtung zum Halten der Leitung in der Einrichtung neben der Brennstoffzelle einschließlich mindestens eines Bauteiles aufweist, der so ausgebildet ist, daß, wenn er mit der Leitung zusammengebaut ist, sich zumindest ein Abschnitt der Leitung an den Bauteil in enger Berührung mit diesem anpaßt.

2. Brennstoffzelle nach Anspruch 1, dadurch gekennzeichnet, daß die Brennstoffzelle sich in einem Stapel von Brennstoffzellen befindet, die eine Vielzahl von laminierten Platten aufweisen, welche eine Endplatte am Ende der Zellen einschließen, daß die Wärmeübertragungseinrichtung im Stapel zwischen zwei benachbarten Brennstoffzellen angeordnet ist und daß die Vorrichtung zum Halten der Leitung einstückig mit der der Leitung benachbarten Endplatte ist und einen Teil derselben bildet.

3. Brennstoffzelle nach Anspruch 1, dadurch gekennzeichnet, daß dei Brennstoffzelle sich in einem Stapel von Brennstoffzellen befindet, der eine Vielzahl von benachbarten einzelnen Brennstoffzelleneinheiten aufweist, die durch eine Wärmeübertragungsplatte voneinander getrennt sind, wobei der Platte Wärmeübertragungsmaterial zugeleitet und von der Platte abgeleitet wird, u.zw. über eine vor der Zufuhr des Kühlmittels zur Platte angeordnete Rohrverzweigung und eine zweite Rohrverzweigung, die zur Sammlung des Wärmeübertragungsmaterials angeordnet ist, nachdem dieses die Platte durchströmt hat, und eine verzweigungsfreie Wärmeaustauscheinrichtung, die je eine Endplatte von zwei benachbarten Brennstoffzelleneinheiten aufweist, welche in Kombination die Vorrichtung zum Halten der Leitung mit einer vorbestimmten Rinnenform bilden, welche so ausgebildet ist, daß sie eine kontinuierliche, gegen Faltenbildung widerstandsfähige, elektrisch isolierende Leitung eng umschließt, wobei die Leitung an ihrem nahen Ende eine Einlaßöffnung zum Einführen des Wärmeübertragungsmaterials und an ihrem fernen Ende eine Auslaßöffnung zum Abgeben des Wärmeübertragungsmaterials aufweist.

4. Brennstoffzelle nach einem der vorhergehenden Ansprüche, dadurch gekennzeichnet, daß die Leitung nicht korrodierbar ist.

5. Brennstoffzelle nach einem der vorhergehenden Ansprüche, dadurch gekennzeichnet, daß die Leitung metallfrei ist.

6. Brennstoffzelle nach einem der vorhergehenden Ansprüche, dadurch gekennzeichnet, daß die Leitung ein einziges kontinuierliches Rohr ist, das in Schlangenform mit periodischen Bögen angeordnet ist, wobei das Rohr an seinen gebogenen Abschnitten gewellt ist.

7. Brennstoffzelle nach einem der vorhergehenden Ansprüche, dadurch gekennzeichnet, daß der Bauteil der Haltevorrichtung eine Rinne zum Halten der Leitung aufweist, wobei die Rinne so geformt ist, daß sie die Leitung der Form der Rinne automatisch anpaßt, wenn der Bauteil und die Leitung zusammengebaut werden.

8. Brennstoffzelle nach Anspruch 7, dadurch gekennzeichnet, daß die Rinnenform ein großes Verhältnis zwischen Wärmeaustausch-Berührungsfläche und Gesamtfläche des Bauteils ergibt.

9. Brennstoffzelle nach Anspruch 8, dadurch gekennzeichnet, daß die Rinne die Leitung in Form einer Nut mit einer abgeschnittenen Halbkreiskontur umschließt.

10. Brennstoffzelle nach einem der vorhergehenden Ansprüche, dadurch gekennzeichnet, daß eine Vielzahl von Leitungen vorhanden ist.

11. Brennstoffzelle nach Anspruch 1, dadurch gekennzeichnet, daß die Leitung ein kontinuierliches Rohr ist, das über seine Länge einen Durchgang für Wärmeübertragungsmaterial und mindestens einen Bogen sowie eine innerhalb des Durchganges gelegene Abstützung aufweist, welche die Fähigkeit der anpaßbaren Leitung erhöht, mit relativ kleinen Radien gebogen zu werden, wobei der Durchgang befähigt bleibt, über seine Länge Wärmeübertragungsmaterial zu leiten, so daß die anpaßbare Leitung mit verhältnismäßig kleinen Radien, ohne Faltenbildung am Bogen oder eine andere strukturelle Beschädigung gebogen werden kann.

12. Brennstoffzelle nach Anspruch 11, dadurch gekennzeichnet, daß die Abstützung eine Wendel ist.

13. Brennstoffzelle nach Anspruch 12, dadurch gekennzeichnet, daß die Wendel eine eng gewundene Wendel in jenen Bereichen über die Länge der Leitung ist, in denen Bögen auftreten, und ein langgestreckter Abschnitt von Wendelmaterial in jenen Bereichen über die Länge der Leitung ist, in welcher Bögen fehlen.

14. Verfahren zum Bilden einer Brennstoffzelle nach Anspruch 1, dadurch gekennzeichnet, daß die Leitung in bestimmten Bereichen mit verhältnismäßig kleinen Radien gebogen wird und mit einem inneren, Faltenbildung widerstehenden Stützaufbau versehen wird, der aus einem einzigen Materialstück hergestellt wird, wobei dieses Verfahren die Schritte des Vorsehens einer Länge von eng gewundenem Wendelabstützungsmaterial, des Streckens des eng gewundenen Wendelmaterials in einem im wesentlichen gestrecken Zustand nur in jenen Abschnitten der Wendellänge, welche nicht den Bögen enthaltenden Bereichen der Leitung entsprechen, und des Einführens des Wendelmaterials in die Leitung umfaßt.

15. Verfahren nach Anspruch 14, dadurch gekennzeichnet, dass es die Stufe enthält worin das Wendelmaterial in die Leitung eingeschraubt wird.

## Revendications

1. Pile à combustible comprenant un ensemble de transfert de chaleur utilisé pour enlever la chaleur et refroidir la pile à combustible, et des moyens pour faire circuler un fluide de transfert de chaleur à travers l'ensemble au voisinage de la pile, caractérisée en ce que l'ensemble comporte au moins un conduit déformable du fluide de transport de chaleur pour transporter le fluide a travers l'ensemble et des moyens de maintien du conduit dans l'ensemble adjacent à la pile à combustible comprenant au moins un support qui soit tel que, lorsqu'il est assemblé avec le conduit, au moins une partie du conduit se déforme en créant un contact intime avec lui.

2. Pile à combustible selon la revendication 1, caractérisée en ce que la pile à combustible est dans un empilement de piles à combustible, les piles à combustible ayant plusieurs plaques stratifiées dont une plaque d'extrémité, et en ce que l'ensemble de transfert de chaleur est situé dans l'empilement entre deux piles à combustible adjacentes et en ce que les moyens pour maintenir le conduit sont intégrés dans et forment une partie de la plaque d'extrémité adjacente au conduit.

3. Pile à combustible selon la revendication 1, caractérisée en ce que la pile à combustible est dans un empilement de piles à combustible ayant plusieurs unités de piles à combustible individuelles adjacentes séparées les unes des autres par une plaque de transfert de chaleur dans laquelle le fluide de transfert de chaleur est distribué à ladite plaque et collecté à partir de celle-ci par un distributeur placé en avant de la distribution dudit réfrigérant dans ladite plaque et un second distributeur placé pour recueillir le fluide de transfert de chaleur après qu'il est passé dans ladite plaque, et un assemblage de transfert de chaleur dans distributeur comprenant une plaque d'extrémité partant de chacune des deux unités de piles à combustible adjacentes qui, combinées, créent lesdits moyens de maintien du conduit selon un dessin prédéterminé de gorges adapté pour loger intimement un conduit continu, résistant au vorillage et électriquement isolé, ledit conduit ayant à son extrémité proximale un orifice d'entrée pour l'introduction du fluide de transfert de chaleur et à son extrémité distale un orifice de sortie pour décharger ledit fluide de transfert de chaleur.

4. Pile à combustible selon l'une quelconque des revendications précédentes, caractérisée en ce que le conduit est non corrodable.

5. Pile à combustible selon l'une quelconque des revendications précédentes, caractérisée en ce que le conduit est non métallique.

6. Pile à combustible selon l'une quelconque des revendications précédentes, caractérisée en ce que le conduit est un tube unique continu disposé en serpentin ayant des courbures périodiques et en ce que le tube est cannelé dans ses parties courbées.

7. Pile à combustible selon l'une quelconque des revendications précédentes, caractérisée en ce que l'élément de maintien comprend une gorge pour maintenir le conduit, la gorge ayant une forme telle que le conduit se déforme automatiquement suivant la forme de la gorge lorsque l'élément et le conduit sont assemblés.

8. Pile à combustible selon la revendication 7, caractérisée en ce que le dessin de la gorge donne un ratio élevé de la surface de transfert de chaleur rapportée à la surface totale de la plaque.

9. Pile à combustible selon la revendication 8, caractérisée en ce que le dessin de la gorge reçoit le conduit dans une gorge ayant un contour semi circulaire tronqué.

10. Pile à combustible selon l'une quelconque des revendications précédentes, caractérisée en ce qu'il y a plusieurs conduits.

11. Pile à combustible selon la revendication 1, caractérisée en ce que le conduit est un tube continu ayant un passage pour le fluide de transfert de chaleur sur toute sa longueur et au moins une courbure, et un support situé dans le passage pour augmenter la capacité du conduit déformable à être courbé avec un rayon relativement faible, le passage conservant sa capacité à transporter le fluide de transfert de chaleur sur toute sa longueur, tandis que le conduit déformable peut être courbé avec un rayon relativement faible sans vrillage à la courbure et sans subir d'autres dommages structurels.

12. Pile à combustible selon la revendication 11, caractérisée en ce que le support est un hélicoïde.

13. Pile à combustible selon la revendication 12, caractérisée en ce que l'hélicoïde est un hélicoïde étroitement bobiné dans les zones sur la longueur du conduit où se trouvent les courbures et est une partie étirée dans les zones sur la longueur du conduit où il n'y a pas de courbure.

14. Procédé de construction d'une pile à combustible selon la revendication 1, dans lequel le conduit est courbé dans certaines zones avec un rayon relativement faible, et dans lequel le conduit contient une structure support interne anti-vrillage, faite d'un matériau en une seule pièce, ledit procédé incluant les étapes de réalisation d'une longueur de matériau support hélicoïdal étroitement bobiné, d'étirage du matériau hélicoïdal étroitement bobiné en forme sensiblement non hélicoïdale dans les seules parties de la longueur de l'hélicoïde qui ne correspondent pas aux zones du conduit dans lesquelles il y a des courbures, et d'insertion du matériau hélicoïdal dans le conduit.

15. Procédé selon la revendication 14, caractérisée en ce qu'il contient l'étape de vissage du matériau hélicoïdal dans le conduit.

FIG. I.

0 128 023

FIG. 2.

0 128 023

FIG. 3 a.

FIG. 3 b.

3

FIG. 4 a.

FIG. 4 b.

FIG. 5.

FIG. 6 a.

FIG. 6 b.

## FIG. 7 a.

## FIG. 7 b.

## FIG. 8 a.

## FIG. 8 b.

## FIG. 8 c.

## FIG. 9.

## FIG. 10.

## FIG. 11.